# EUROPÄISCHE PATENTSCHRIFT

(11) **EP 1 460 325 B1**
(45) Veröffentlichungstag und Bekanntmachung des Hinweises auf die Patenterteilung: **11.11.2009**
(21) Anmeldenummer: 04001398.9
(22) Anmeldetag: 23.01.2004
(51) Int. Cl.: F16L 21/08

(54) **Zuggesicherte Muffenrohrverbindung**
Pipe socket joint secured against decoupling
Raccord à manchon de tuyaux sécurisé contre découplage

(30) Priorität: 15.03.2003 DE 10306316
(43) Veröffentlichungstag der Anmeldung: 22.09.2004
(73) Patentinhaber: Buderus Giesserei Wetzlar GmbH, 35576 Wetzlar (DE)
(72) Erfinder: Maurer, Reinhold, 6020 Innsbruck (AT); Schmax, Franz, 35580 Wetzlar (DE)
(74) Vertreter: Buchhold, Jürgen

(56) Entgegenhaltungen:
- FR-A- 1 168 647
- US-A- 3 684 320
- US-A- 4 303 262

## Beschreibung

Die Erfindung betrifft eine zuggesicherte Muffenrohrverbindung nach dem Oberbegriff des Patentanspruches 1.
Eine Muffenrohrverbindung dieser Art ist der DE-AS 2 016 440 zu entnehmen. Dabei ist das Einsteckende eines Rohres oder Formstückes in der Muffe eines anderen Teiles durch eine Dichtung in einer umlaufenden Kammer abgedichtet. Der Kammer ist eine Vorkammer vorgelagert, in welche Riegel eingeschoben sind, die sich am stirnseitigen Begrenzungsbund der Muffe und an einem Außenwulst, vorzugsweise einer Schweißraupe, auf dem Einsteckende eines Rohres abstützen. Auf diese Weise wird die Rohrverbindung gegen Zug gesichert.
Bei der speziellen Version einer zuggesicherten Rohrverbindung gemäß DE 199 18 717 C1 werden zunächst die Rohrteile zusammengefügt. Anschließend werden die Riegel durch eine Öffnung im stirnseitigen Begrenzungsbund der Muffe eingelegt und radial nach links bzw. rechts in ihre Verriegelungslage zwischen dem Begrenzungsbund und dem Außenwulst auf dem Einsteckende gebracht. Durch je einen Riegel auf der linken und auf der rechten Seite ist eine gleichmäßige Sicherung gegen Zugkräfte vorhanden. Außerdem werden die Riegel durch ein separates Teil aus flexiblem Material in ihrer Lage fixiert, weil damit in der Vorkammer der Öffnungsbereich zwischen den Enden der Riegel vollständig ausgefüllt ist.
Bei je einem Riegel auf der linken und auf der rechten Seite und bei je zwei Riegeln auf jeder Seite ab der Nennweite DN 300 verbleibt zwangsweise eine Zone, die von den Riegeln nicht erfasst ist. Zudem muss die Länge der Einlegeöffnung mindestens der Länge der Riegel entsprechen. Die wirksame Anlagefläche des Begrenzungsbundes, und damit das Höchstmaß der aufzunehmenden Zugkräfte, ist dadurch begrenzt.
Weiterhin zeigt die US 3 684 320 eine Muffenrohrverbindung mit Riegeln in einer Vorkammer und einem davon unabhängig in einer umlaufenden Kammer angeordneten Dichtring.

Diese Dichtung besitzt ein frei bewegliches, wulstartiges Ende innerhalb einer umlaufenden Kammer, dem ein Haltebereich mit einer umlaufenden Nut am Innenumfang der Muffe zugeordnet ist. Direkt neben der Nut befindet sich in Einsteckrichtung ein umlaufender Haltebund in der Muffe, welcher im Wesentlichen die Kammer für die Dichtung begrenzt. Mit dem Haltebereich ist die Dichtung innerhalb der Muffe fixiert. Bei der Montage wird dann das wulstartige Ende der Dichtung vom Einsteckende des Rohres gegen die äußere Wand der Kammer gepresst. Mit dieser bewährten Art der Abdichtung lassen sich sogar die Rohre innerhalb der Muffen leicht zueinander abwinkeln, so dass Formstücke eingespart werden können. Die notwendigen Montagekräfte zum Herstellen der Rohrverbindung können sich allerdings bei einigen Einbausituationen, vor allem in schwierigem Gelände, nachteilig auswirken.

Der Erfindung liegt daher die Aufgabe zugrunde, bei einer zuggesicherten Muffenrohrverbindung insbesondere die Montagekräfte zu verringern und die wirksame Anlagefläche für höhere Zugkräfte zu optimieren.

Erfindungsgemäß wurde dies mit den Merkmalen im Patentanspruch 1 gelöst. Vorteilhafte Weiterbildungen sind den Unteransprüchen zu entnehmen.

Die erfindungsgemäße Muffenrohrverbindung ist dadurch gekennzeichnet, dass die Dichtung einstückig ausgeführt ist und aus einem auf die bekannte Geometrie der Nut abgestimmten Haltebereich sowie einem Dichtbereich mit einem schwalbenschwanzartigen Querschnitt besteht. Dabei weist der Haltebereich der Dichtung etwa die gleiche Härte des Gummis auf wie bei bekannten Ausführungen, aber der Dichtbereich besitzt im Vergleich dazu eine geringere Härte.
Außerdem ist der Dichtbereich am freien Ende der Dichtung mit einer umlaufenden Einkerbung versehen, so dass ein schwalbenschwanzartiger Querschnitt entsteht. Die Einkerbung reicht vorzugsweise auf bis zu 20 Prozent der Gesamtlänge in den Querschnitt der Dichtung hinein und ist etwas außerhalb der Mitte der Dichtung angebracht. Dadurch ist der innere, am einzusteckenden Rohr anliegende Schenkel etwas breiter und massiver ausgeführt als der äußere, an der Wand der Kammer an der Muffe anliegende Schenkel.

Der eigentliche Dichtbereich weitet sich, ausgehend vom Haltebereich, in radialer Richtung auf, wobei im unbelasteten Zustand das schwalbenschwanzartige freie Ende etwa die doppelte Breite wie der Haltebereich besitzt. Die beiden Schenkel sind im schwalbenschwanzartigen Endbereich zunehmend stärker nach außen aufgeweitet, wobei die Länge dieser Zonen im Wesentlichen der Tiefe der Einkerbung entspricht. Zudem enden die beiden Schenkel im schwalbenschwanzartigen Endbereich vorzugsweise spitz und schließen im unbelasteten Zustand mit der Einkerbung einen Winkel von etwa 100 Grad ein.
Der Haltebereich besitzt eine Aussparung, welche den umlaufenden Haltebund in der Muffe, der sich zwischen der Nut und der umlaufenden Kammer für die Dichtung befindet, fast vollständig umgreift. Dadurch liegt die Außenfläche der Dichtung im montierten Zustand der Rohre im Wesentlichen an der äußeren Wand der Kammer an. Bis etwa über die Hälfte der Länge des Querschnitts der Dichtung erstreckt sich der elastischere Dichtbereich, wobei der Übergang zwischen dem Haltebereich und dem Dichtbereich so gestaltet ist, dass der weichere Werkstoff des Dichtbereiches in der Mitte der Dichtung etwas weiter bis in den Haltebereich reicht als in den Randbereichen der Dichtung. Gegenüber einer herkömmlichen Dichtung verringern sich daher die Montagekräfte, weil durch die erfindungsgemäße Geometrie nur ein geringer Teil des festeren Haltebereiches zu verpressen ist und die für die Montagekräfte wesentliche Stauchung der Dichtung fast ausschließlich im elastischen Dichtbereich zu finden ist. Jedenfalls bleibt der Haltebereich unverändert, so dass bei Bedarf in alle vorhandenen Muffen mit der bekannten Geometrie wahlweise auch die erfindungsgemäße Dichtung eingesetzt werden kann.
Ergänzend zu den vorgeschlagenen Maßnahmen kann die wirksame Anlagefläche für höhere Zugkräfte an der Rohrverbindung mit einem zusätzlichen Riegel aus einem druckfesten Material noch weiter erhöht werden. Dieser ist in den unteren Bereich der Vorkammer einzufügen und stützt sich am stirnseitigen Begrenzungsbund der Muffe und an einem Außenwulst auf dem Einsteckende des Rohres ab. Der zusätzliche Riegel ist vorzugsweise auf die Länge der oberen Öffnung im stirnseitigen Begrenzungsbund der Muffe abgestimmt und füllt im unteren Bereich der Vorkammer den Raum zwischen den bekannten Riegeln auf beiden Seiten der Muffe im Wesentlichen aus. Mit diesem Formschluss steht eine vergrößerte Anlagefläche zur Kraftübertragung zur Verfügung, beispielsweise für Leitungen mit erhöhtem Innendruck oder für lange, vormontierte Leitungen, insbesondere wie beim grabenlosen Einbau üblich.

Mit der erfindungsgemäßen Anordnung wird eine zuggesicherte Muffenrohrverbindung geschaffen, welche gegenüber herkömmlichen Ausführungen in Bezug auf die Verringerung der Montagekräfte und die Erhöhung der wirksamen Anlagefläche für höhere Zugkräfte optimiert ist. Durch den weiterhin gleich gestalteten Haltebereich der Dichtung kann bei Bedarf in alle vorhandenen Muffen mit der bekannten Geometrie jederzeit auch die erfindungsgemäße Dichtung eingesetzt werden, um die besonderen Einbauvorteile zu nutzen. Dadurch ergeben sich flexible Einsatzmöglichkeiten für die zuggesicherte Muffenrohrverbindung, zum Beispiel gemäß den vorliegenden Einbausituationen oder auf Grund spezieller Kundenwünsche, ohne dass ein erhöhter logistischer Aufwand entsteht.

Die Zeichnung stellt ein Ausführungsbeispiel der Erfindung dar. Es zeigt:

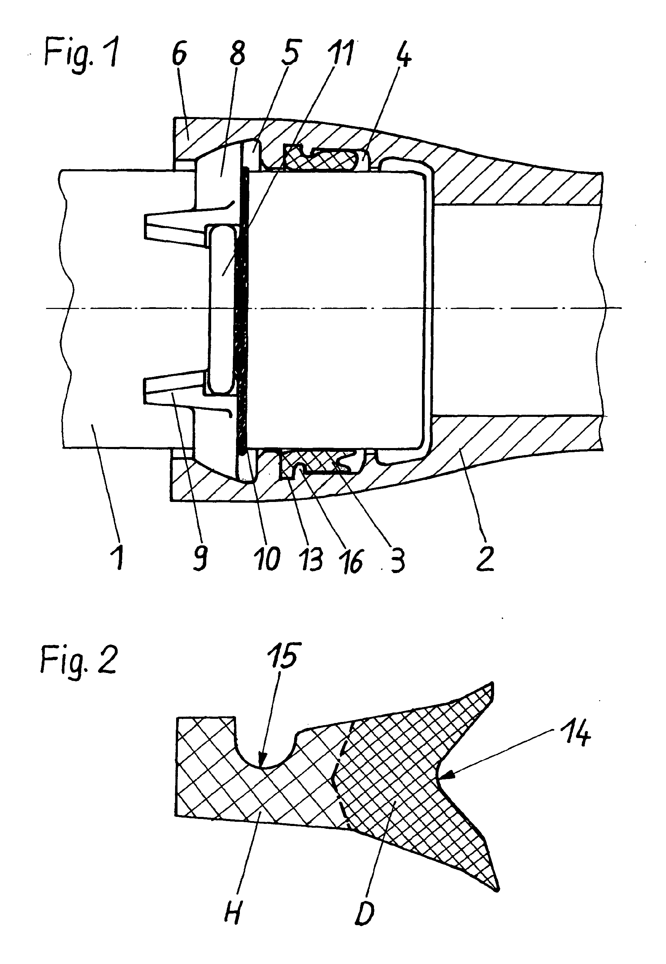

- Fig. 1:: Den Längsschnitt durch eine zuggesicherte Muffenrohrverbindung mit einer herkömmlichen Dichtung im oberen und mit einer erfindungsgemäßen Dichtung gemäß Fig. 2 im unteren Halbschnitt,
- Fig. 2:: eine erfindungsgemäße Dichtung,

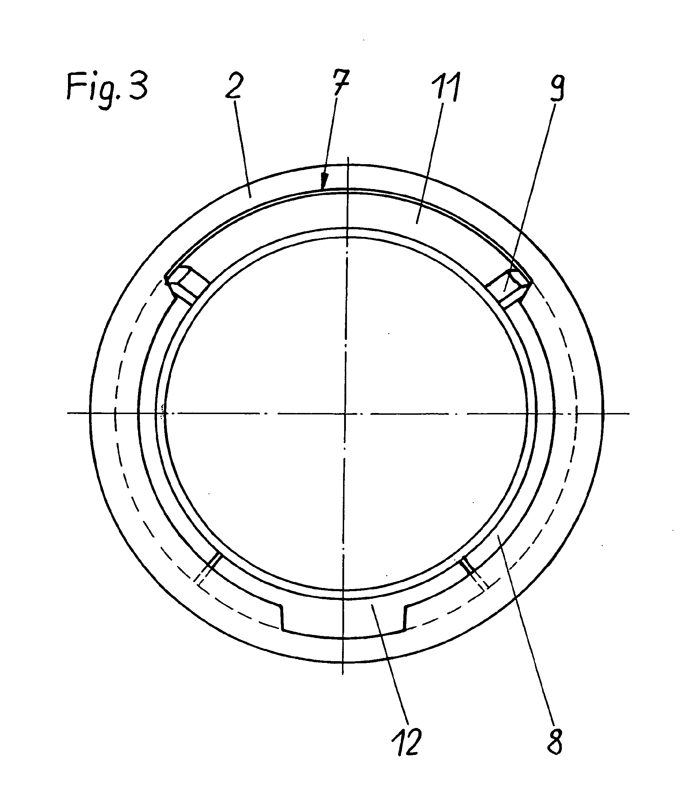

- Fig. 3:: eine zuggesicherte Muffenrohrverbindung in der Vorderansicht.

Das Einsteckende eines Rohres 1 ist in die Muffe 2 eines anderen Rohres eingeschoben und dort durch eine Dichtung 3 in einer umlaufenden Kammer 4 abgedichtet. Die Muffe 2 besitzt ferner eine Vorkammer 5 und einen stirnseitigen Begrenzungsbund 6, der durch mindestens eine Öffnung 7 unterbrochen ist.
Nach dem Zusammenfügen der Rohre 1, 2 werden von der Stirnseite her jeweils ein rechter und ein linker Riegel 8 in die Öffnung 7 eingelegt und radial soweit verschoben, dass sie mit Ausnahme eines Ansatzes 9 voll unter dem Begrenzungsbund 6 liegen. Die Riegel 8 stützen sich am Begrenzungsbund 6 beziehungsweise an einem Außenwulst 10 auf dem Einsteckende 1 ab und bewirken eine Sicherung gegen Zugkräfte. Mit einem separaten Teil 11 aus flexiblem Material, welches in der Vorkammer 5 den Öffnungsbereich zwischen den Enden der Riegel 8 vollständig ausgefüllt, werden die Riegel 8 in ihrer Lage fixiert. Da die Länge der Riegel 8 durch die Größe der Öffnung 7 begrenzt ist, können sie die Anlagefläche des Begrenzungsbundes 6 nicht vollständig untergreifen. Um hinsichtlich der Flächenpressung ungenutzte Zonen zu vermeiden, wird daher bei der Montage zuerst ein zusätzlicher Riegel 12 aus einem druckfesten Material in den der Öffnung 7 gegenüber liegenden Bereich der Vorkammer 5 eingeschoben.
Die Dichtung 3 ist auf die bekannte Geometrie der Nut 13 abgestimmt und besitzt einen Haltebereich H sowie einen Dichtbereich D mit einem schwalbenschwanzartigen Querschnitt, einer geringeren Härte und einer umlaufenden Einkerbung 14 am freien Ende. Der Dichtbereich D weitet sich ausgehend vom Haltebereich H auf.
Der Haltebereich besitzt eine Aussparung 15, welche den umlaufenden Haltebund 16 in der Muffe, der sich zwischen der Nut 13 und der umlaufenden Kammer 4 befindet, fast vollständig umgreift. Weiterhin entspricht der Haltebereich H den herkömmlichen Muffengestaltungen.

## Patentansprüche

1. Zuggesicherte Muffenrohrverbindung, bei der das Einsteckende eines Rohres (1) in der Muffe (2) eines anderen Rohres durch eine Dichtung (3) aus Gummi in einer umlaufenden Kammer (4) abgedichtet und durch Riegel (8) in einer Vorkammer (5) gegen Zug gesichert ist, wobei sich die Riegel (8) am stirnseitigen Begrenzungsbund (6) der Muffe (2) und an einem Außenwulst (10) auf dem Einsteckende (1) abstützen, und wobei die Dichtung (3) ein freies Ende sowie einen bekannten Haltebereich (H) aufweist, der einer Nut (13) mit einer bekannten Geometrie am Innenumfang der Muffe (2) zugeordnet ist, **dadurch gekennzeichnet, dass** die Dichtung (3) einstückig ausgeführt ist und aus einem auf die bekannte Geometrie der Nut (13) abgestimmten Haltebereich (H) sowie einem Dichtbereich (D) besteht, wobei der Dichtbereich (D) am freien Ende der Dichtung (3) eine umlaufende Einkerbung (14) aufweist, so dass ein schwalbenschwanzartiger Querschnitt entsteht und wobei der Haltebereich (H) der Dichtung (3) etwa die gleiche Härte des Gummis aufweist wie bei bekannten Ausführungen und der Dichtbereich (D) im Vergleich dazu eine geringere Härte besitzt.

2. Zuggesicherte Muffenrohrverbindung nach Anspruch 1, **dadurch gekennzeichnet, dass** die Einkerbung (14) vorzugsweise bis zu 20 Prozent der Gesamtlänge in den Querschnitt der Dichtung (3) hinein reicht.

3. Zuggesicherte Muffenrohrverbindung nach einem der Ansprüche 1 bis 2, **dadurch gekennzeichnet, dass** die Einkerbung (14) etwas außerhalb der Mitte der Dichtung (3) angebracht ist und **dadurch** der innere, am einzusteckenden Rohr (1) anliegende Schenkel etwas breiter und massiver ausgeführt ist als der äußere, in der Kammer (4) an der Muffe (2) anliegende Schenkel.

4. Zuggesicherte Muffenrohrverbindung nach einem der Ansprüche 1 bis 3, **dadurch gekennzeichnet, dass** sich der Dichtbereich (D), ausgehend vom Haltebereich (H), in radialer Richtung aufweitet, wobei im unbelasteten Zustand das schwalbenschwanzartige freie Ende etwa die doppelte Breite wie der Haltebereich (H) besitzt.

5. Zuggesicherte Muffenrohrverbindung nach einem der Ansprüche 1 bis 4, **dadurch gekennzeichnet, dass** die beiden Schenkel im schwalbenschwanzartigen Endbereich stärker nach außen aufgeweitet sind, wobei die Länge dieser Zonen im Wesentlichen der Tiefe der Einkerbung (14) entspricht.

6. Zuggesicherte Muffenrohrverbindung nach einem der Ansprüche 1 bis 5, **dadurch gekennzeichnet, dass** die beiden Schenkel im schwalbenschwanzartigen Endbereich vorzugsweise spitz enden und im unbelasteten Zustand mit der Einkerbung (14) einen Winkel von etwa 100 Grad einschließen.

7. Zuggesicherte Muffenrohrverbindung nach einem der Ansprüche 1 bis 6, **dadurch gekennzeichnet, dass** der Haltebereich (H) eine Aussparung (15) besitzt, die einen umlaufenden Haltebund (16) in der Muffe (2), welcher sich zwischen der Nut (13) und der umlaufenden Kammer (4) für die Dichtung (3) befindet, fast vollständig umgreift, so dass die Außenfläche der Dichtung (3) im montierten Zustand im Wesentlichen an der äußeren Wand der Kammer (4) anliegt.

8. Zuggesicherte Muffenrohrverbindung nach einem der Ansprüche 1 bis 7, **dadurch gekennzeichnet, dass** der Dichtbereich (D) sich etwa über die Hälfte der Länge des Querschnitts der Dichtung (3) erstreckt, wobei der Übergang zwischen dem Haltebereich (H) und dem Dichtbereich (D) so gestaltet ist, dass der weichere Werkstoff des Dichtbereiches (D) in der Mitte der Dichtung (3) etwas weiter bis in den Haltebereich (H) reicht als in den Randbereichen der Dichtung (3).

9. Zuggesicherte Muffenrohrverbindung nach einem der Ansprüche 1 bis 8, **dadurch gekennzeichnet, dass** in den unteren Bereich der Vorkammer (5) ein zusätzlicher Riegel (12) aus einem druckfesten Material, welcher sich am stirnseitigen Begrenzungsbund (6) der Muffe (2) und an einem Außenwulst (10) auf dem Einsteckende des Rohres (1) abstützt, einzufügen ist.

10. Zuggesicherte Muffenrohrverbindung nach einem der Ansprüche 1 bis 9, **dadurch gekennzeichnet, dass** der zusätzliche Riegel (12) vorzugsweise auf die Länge der oberen Öffnung (7) im stirnseitigen Begrenzungsbund (6) der Muffe (2) abgestimmt ist und im unteren Bereich der Vorkammer (5) den Raum zwischen den bekannten Riegeln (8) auf beiden Seiten der Muffe (2) im Wesentlichen ausfüllt.

## Claims

1. Tension-proof socket pipe joint with which the push-in side of a pipe (1) in the socket of another pipe is sealed by a rubber gasket (3) within a circumferential housing (4) and secured against tension by bars (8) in a pre-chamber (5), with the bars (8) supporting themselves on the limiting collar (6) at the front of the socket (2) and on an outer bead (10) on the push-in end (1), and with the gasket (3) having a clear end and a known holding segment (H) that is associated to a groove (13) of known geometry at the inside perimeter of the socket (2), **characterized in that** the gasket (3) is designed in one piece consisting of a holding segment (H) that matches with the known geometry of the groove (13), and of a sealing segment (D), with such sealing segment (D) showing at the clear end of the gasket (3) a circumferential recess (14) forming a dovetail-like profile, and with the holding segment (H) of the gasket (3) being of approximately the same rubber hardness as with known designs whereas the sealing segment (D) but the sealing segment (D) being less harder compared thereto.

2. Tension-proof socket pipe joint according to Claim 1, **characterized in that** the recess (14) preferably advances up to 20 percent of the total length into the profile of the gasket (3).

3. Tension-proof socket pipe joint according to one of the Claims 1 to 2, **characterized in that** the recess (14) is located in slight deviation from the centre of the gasket (3) causing the inner leg that fits closely to the pipe to be pushed in, to be of a larger and more massive design than the outer leg in the housing (4), which fits closely to the socket (2).

4. Tension-proof socket pipe joint according to one of the Claims 1 to 3, **characterized in that** the sealing segment (D) expands in radial direction starting from the holding segment (H), with the dovetail-like clear end being in non-load condition of approximately double the breadth of the holding segment (H).

5. Tension-proof socket pipe joint according to one of the Claims 1 to 4, **characterized in that** the two legs in the dovetail-like end section are more widely expanded outwards, with the length of these zones corresponding substantially to the depth of the recess (14).

6. Tension-proof socket pipe joint according to one of the Claims 1 to 5, **characterized in that** the two legs in the dovetail-like end section are preferably pointed and in non-load condition encompass with the recess (14) an angle of about 100 degrees.

7. Tension-proof socket pipe joint according to one of the Claims 1 to 6, **characterized in that** the holding segment (H) has a recess (15) that nearly completely embraces a circumferential holding collar (16) in the socket (2), which is located between the groove (13) and the circumferential housing (4) for the gasket (3), so that in assembled condition the surface of the gasket (3) substantially fits to the outside wall of the housing (4).

8. Tension-proof socket pipe joint according to one of the Claims 1 to 7, **characterized in that** the sealing segment (D) stretches over approximately half of the length of the profile of the gasket (3), with the transition between the holding segment (H) and the sealing segment (D) being designed such that in the middle of the gasket the softer material of the sealing segment (D) projects slightly deeper into the holding segment (H) than in the edge areas of the gasket (3).

9. Tension-proof socket pipe joint according to one of the Claims 1 to 8, **characterized in that** in the lower section of the pre-chamber (5) an additional bar (12) of a compression-proof material has to be inserted that supports itself on the limiting collar (6) at the front of the socket (2) and on an outer bead (1) on the push-in end of the pipe (1).

10. Tension-proof socket pipe joint according to one of the Claims 1 to 9, **characterized in that** the additional bar (12) preferably matches with the length of the upper opening (7) in the limiting collar (6) at the front of the socket (2), and in the lower section of the pre-chamber (5) substantially fills the space between the known bars (8) on both sides of the socket (2).

## Revendications

1. Joint tuyau à manchon résistant à la traction dont l'emmanchement d'un tuyau (1) dans le manchon (2) d'un autre tuyau est rendu étanche par un joint (3) en caoutchouc dans une chambre périphérique (4) et protégé contre traction par des verrous (8) dans une préchambre (5), à quoi les verrous (8) s'appuient au collet limitatif (6) sur la face
du manchon (2) et à un bourrelet extérieur (10) sur l'emmanchement (1)m, et à quoi le joint (3) a une extrémité libre et un segment de retenue connu (H) qui est coordonné à une rainure (13) d'une géométrie connue au périmètre intérieur du manchon (2), **caractérisé en ce que** le joint (3) est formé d'une seule pièce et composé d'un segment de retenue (H) s'accordant à la géométrie connue de la rainure (13) et d'un segment d'étanchéité (D), avec ce segment d'étanchéité (D) montrant à l'extrémité libre du joint (3) un évidement périphérique (14) formant un profil en queue d'aronde, et le segment de retenue (H) du joint ayant presque la même dureté de caoutchouc que les réalisations connues, pendant que le segment d'étanchéité (D) est moins dur comparativement à ceci.

2. Joint tuyau à manchon résistant à la traction selon la Revendication 1, **caractérisé en ce que** l'évidement (14) s'allonge de préférence jusqu'à 20 pourcent de la longueur totale dans le profile du joint (3).

3. Joint tuyau à manchon résistant à la traction selon une des Revendications 1 à 2, **caractérisé en ce que** l'évidement (14) est formé un peu en dehors du centre du joint (3) ainsi que la branche intérieure collant au tuyau à introduire (1) est construite un peu plus large et massive que la branche extérieure collant dans la chambre (4) au joint (2).

4. Joint tuyau á manchon résistant à la traction selon une des Revendications 1 à 3, **caractérisé en ce que** le segment d'étanchéité (D) s'écarte en direction radiale du segment de retenue (H) à quoi en état non chargé l'extrémité libre en queue d'aronde est d'une largeur presque double de celle du segment de retenue (H).

5. Joint tuyau à manchon résistant à la traction selon une des Revendications 1 à 4, **caractérisé en ce que les** deux branches sont écartées plus vers l'extérieur dans la section de bout en queue d'aronde, telle que la longueur de ces zones correspond substantiellement à la profondeur de l'évidement (14).

6. Joint tuyau à manchon résistant à la traction selon une des Revendications 1 à 5, **caractérisé en ce que** les deux branches dans la section de bout en queue d'aronde sont de préférence en pointe effilée et en état non chargé renferment avec l'évidement un angle de 100 degrés à peu prés.

7. Joint tuyau à manchon résistant à la traction selon une des Revendications 1 à 6, **caractérisé en ce que** le segment de retenue (H) a une cavité (15) qui enveloppe presque totalement un collet de retenue (16) périphérique logé dans le manchon (2) et se trouvant entre la rainure (13) et la chambre périphérique (4) pour le joint (3) telle que, en état assemblé, la surface du joint (3) colle substantiellement au paroi extérieur de la chambre (4).

8. Joint tuyau à manchon résistant à la traction selon une des Revendications 1 à 7, **caractérisé en ce que** le segment d'étanchéité (D) s'allonge presque sur la moitié de la longueur du profil du joint (3), á quoi la transition entre le segment de retenue (H) et le segment d'étanchéité (D) est formée tel qu'au milieu du joint (3) les matériaux plus mous du segment d'étanchéité (D) s'avancent un peu plus profondément dans le segment de retenue (H) qu'aux régions de bord du joint (3).

9. Joint tuyau à manchon résistant à la traction selon une des Revendications 1 à 8, **caractérisé en ce que** dans la section inférieure de la préchambre (5) est à insérer un verrou additionnel (12) en matière à l'épreuve de pression, qui s'appuie au collet limitatif (6) sur la face du manchon (2) et à un bourrelet extérieur (19) sur l'emmanchement du tuyau (1).

10. Joint tuyau à manchon résistant à la traction selon une des Revendications 1 à 9, **caractérisé en ce que** le verrou additionnel (12) s'accorde de préférence à la longueur de l'ouverture supérieure (7) dans le collet limitatif (6) sur la face du manchon (2), et dans la section inférieure de la préchambre (5) comble substantiellement l'espace entre les deux verrous connus (8) sur les deux côtés du manchon (2).
